## Europäisches Patentamt

## European Patent Office

## Office européen des brevets

(19)

(11) Veröffentlichungsnummer: **0 125 388
B1**

(12) **EUROPÄISCHE PATENTSCHRIFT**

(45) Veröffentlichungstag der Patentschrift:
**01.04.87**

(21) Anmeldenummer: **84101160.4**

(22) Anmeldetag: **13.01.82**

(60) Veröffentlichungsnummer der früheren Anmeldung
nach Art. 76 EPÜ: **0058294**

(51) Int. Cl.⁴: **B 60 J 3/02**

(54) **Anordnung einer Sonnenblende oberhalb einer Seitenscheibe in einem Fahrzeug.**

(30) Priorität: **18.02.81 DE 3105848**

(43) Veröffentlichungstag der Anmeldung:
**21.11.84 Patentblatt 84/47**

(45) Bekanntmachung des Hinweises auf die Patenterteilung:
**01.04.87 Patentblatt 87/14**

(84) Benannte Vertragsstaaten:
**DE FR GB IT SE**

(56) Entgegenhaltungen:
**FR - A - 2 235 011
US - A - 2 101 901
US - A - 2 559 471
US - A - 3 853 370**

(73) Patentinhaber: **Gebr. Happich GmbH,
Postfach 10 02 49 Clausenbrücke 1,
D-5600 Wuppertal 1 (DE)**

(72) Erfinder: **Mahler, Gert, Kreuzstrasse 5,
D-5608 Radevormwald (DE)**
Erfinder: **Cziptschirsch, Kurt, Am Heckendorn 43,
D-5600 Wuppertal 2 (DE)**
Erfinder: **Oltmanns, Oltmann, Auf dem Kölnberg 1-5 13,
D-5000 Köln 50 (DE)**

## Beschreibung

Die Erfindung bezieht sich auf die Anordnung einer Sonnenblende in einem Fahrzeug der im Oberbegriff des Patentanspruchs 1 angegebenen Art.

Die Sonnenblendenkörper üblicher Sonnenblenden sind im allgemeinen klappbar oberhalb der Winschutzscheibe eines Fahrzeuges angeordnet und derart gelagert, dass sie auch jeweils zu einer der vorderen Seitenscheiben hin verschwenkt werden können. Damit ist es möglich, den Sonnenblendenkörper, je nachdem ob die Sonnenstrahlen von vorn oder von der Seite einfallen, entsprechend einzustellen.

Diese bekannte Sonnenblendenanordnung ist bei der heutigen Fahrzeuggeneration ungünstig, weil insbesondere Personenkraftfahrzeuge eine relativ niedrige Bauhöhe und häufig auch einen räumlich eng begrenzten Fahrgastraum besitzen, so dass ein Fahrzeuglenker gezwungen ist, Kopfverrenkungen zu vollführen, wenn er den Sonnenblendenkörper von der Windschutzscheibe zur Seitenscheibe oder umgekehrt verschwenkt. Hinzu kommt, dass die von einem Kraftfahrzeug befahrenen Strassen häufig ihre Richtung wechseln, so dass auch die Sonnenstrahlen wechselseitig von vorn oder von der Seite kommen. Der Fahrzeuglenker muss daher dauernd den Sonnenblendenkörper verstellen oder in Kauf nehmen, dass er geblendet wird, wenn er den Sonnenblendenkörper einfach in der falschen Lage stehen lässt.

Im Hinblick auf die niedrige Bauhöhe der heutigen Fahrzeuge ist auch eine andere bekannte Sonnenblende (vgl. DE-U- 18 50 299), die zwei Sonnenblendenkörper aufweist, welche um 90° zueinander versetzten Stangen schwenkbar so gelagert sind, dass der eine Sonnenblendenkörper an ein vorderes Seitenfenster und der andere an die Windschutzscheibe heranklappbar ist, ungünstig angeordnet. Das gleiche gilt für eine Sonnenblendenanordnung, bei der der vor der Windschutzscheibe befindliche Sonnenblendenkörper mit einem zur Seitenscheibe hin verschwenkbaren Flügel ausgerüstet ist (vgl. z.B. DE-U- 77 06 998).

Eine Beengung des Fahrgastraums bei der Überführung des Sonnenblendenkörpers aus der Nichtgebrauchslage in die Gebrauchslage und umgekehrt, wird zwar bei einer durch die US-A- 2 559 471 noch bekanntgewordenen Sonnenblendenanordnung vermieden, wobei diese Sonnenblendenanordnung jedoch einen aus einer halbharten Kunststoffolie bestehenden Sonnenblendenkörper aufweist. Der Sonnenblendenkörper ist einendig mit einer Stange verbunden, die den Sonnenblendenkörper beidseitig mit zapfenartigen Enden überragt. Die zapfenartigen Enden der Stange bilden Lagerelemente, die in Führungen, welche als gebogene, im Querschnitt U-förmige und an der Fahrzeugkarosserie befestigte Schienen ausgebildet sind, eingreifen. Diese mit einem Fensterrollo vergleichbare Sonnenblendenanordnung erscheint störanfällig, instabil und vergleichsweise aufwendig.

Der vorliegenden Erfindung liegt die Aufgabe zugrunde eine Anordnung der gattungsgemässen Art derart weiterzubilden, dass sich eine Abschirmung der vorderen Seitenscheiben eines Fahrzeuges mit formstabilen Sonnenblendenkörpern ohne Beengung des Fahrgastraumes besonders einfach, zuverlässig und kostengünstig ermöglichen lässt, wobei auch ein angenehmes Erscheinungsbild angestrebt wird.

Die Lösung dieser Aufgabe ist im kennzeichnenden Teil des Patentanspruchs 1 angegeben.

Die erfindungsgemässe Anordnung bringt in verschiedener Hinsicht wesentliche Vorteile. Insbesondere kann der Sonnenblendenkörper, ohne den Fahrgastraum des Fahrzeugs dabei zu beengen, aus der Nichtgebrauchslage in die Gebrauchslage oder umgekehrt überführt werden. Dies ist besonders bei Fahrzeugen mit geringer Gesamthöhe und entsprechend geringer Kopffreiheit für die Fahrzeugbenutzer vorteilhaft. Die Überführung ist auch unabhängig davon, welche Position die vor der Windschutzscheibe angeordneten Sonnenblendenkörper einnehmen, durchführbar. Auch ist es nicht mehr zwingend erforderlich, dass der Sonnenblendenkörper Polstereigenschaften aufweist, denn seine Randkanten werden ja nicht mehr ins Fahrzeuginnere hereingeschwenkt. Die für die Überführung des Sonnenblendenkörpers aus der einen in die andere Endlage erforderlichen Lagerelemente können an seiner Rückseite angeordnet sein, so dass auch ein angenehmes Erscheinungsbild gewährleistet ist.

Weitere wesentliche Merkmale und zweckmässige Ausgestaltungen der Erfindung sind in den Unteransprüchen gekennzeichnet.

Die Erfindung wird nachfolgend anhand eines in der Zeichnung dargestellten Ausführungsbeispiels näher erläutert. Es zeigen:

Fig. 1 die Seitenansicht einer Sonnenblendenanordnung und

Fig. 2 eine Ansicht auf die Rückseite der Anordnung nach Fig. 1.

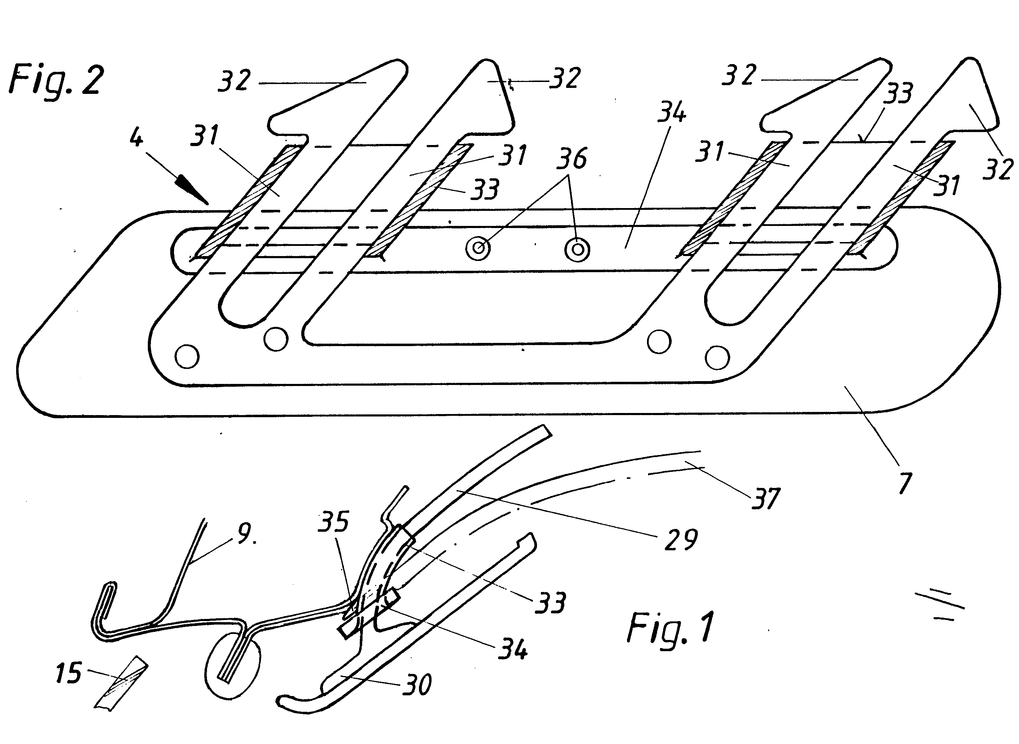

Bei der Anordnung der Sonnenblende 4 nach Fig. 1 und 2 ist der Sonnenblendenkörper 7 mit Zapfen 29 ausgebildet. Die Zapfen 29 sind an der der Seitenscheibe 15 zugewandten Seite des Sonnenblendenkörpers 7 angeordnet, überragen dessen obere Randkante und besitzen eine zweiarmige Gabelform. Die Zapfen 29 sind jeweils über ein Fussstück 30 am Sonnenblendenkörper 7 angeschlossen, wobei unter angeschlossen eine separate Herstellung und Anbringung der Zapfen 29 am Sonnenblendenkörper 7 oder auch eine einstückige Ausbildung mit dem Sonnenblendenkörper 7 verstanden werden kann. Die Arme 31 der Zapfen 29 sind an ihrem freien Endbereich jeweils mit nach aussen gerichteten nasenförmigen Endanschlägen 32 versehen. Ferner bestehen die Zapfen 29 aus einem biegeelastischen Material, das es zumindest ermöglicht, die Arme 31 jedes Zapfens 29 ohne bleibende Verformung aneinanderzudrücken.

Die Zapfen 29 sind von Führungsstutzen 33 aufgenommen, die am Dachhimmel, an der Dachhimmelverkleidung 6 und/oder am Dachrahmen 9 befestigt sind. Die Führungsstutzen 33 nehmen die Zapfen 29 verschiebbar auf, wobei zum Verschieben eine gewisse Reibungskraft überwunden werden muss, die beispielsweise daraus resultiert, dass die Arme 31 jedes Zapfens 29 in der Ausgangslage leicht divergieren und im montierten Zustand unter Federspannung an den Innenwandungen der Führungsstutzen 33 anliegen. Dadurch ist der Sonnenblendenkörper 7 in jeder Lage gegen unbeabsichtigtes Verschieben geschützt. Zusätzlich oder alternativ kann auch jeder Führungsstutzen 33 mit einem Nocken und die diesem jeweils benachbarte Fläche der Arme 31 zahnstangenartig gestaltet sein. Hierdurch wird eine ratschenartige Bewegung bzw. Verschiebung des Sonnenblendenkörpers 7 ermöglicht.

Anstelle einer durchaus denkbaren Einzelanfertigung und Montage der Führungsstutzen 33 zeigt Fig. 1 eine Ausführungsform, bei der die Führungsstutzen 33 einstückig mit einer Rosette 34 ausgebildet sind, wobei diese Einheit vorzugsweise aus einem Kunststoff-Spritzgussteil besteht. Die Rosette 34 ist für eine Klipsmontage mit Einlaufschrägen aufweisenden Nocken 35 und/ oder mit Bohrungen 36 zum Durchführen von Befestigungsschrauben versehen.

Wie Fig. 2 zeigt, ist bei dieser Ausführungsform auch eine Verschiebung des Sonnenblendenkörpers 7 auf einer schrägen Ebene verwirklicht, wobei die Endanschläge 32 die Schiebebewegung nach unten begrenzen, indem sie sich auf die Stirnenden der Führungsstutzen 33 abstützen. Fig. 1 lässt die sinnvolle Anordnung der Zapfen 29 hinter der Dachrahmenverkleidung, an die sich der Dachhimmel 37 anschliesst, erkennen. Ferner lässt Fig. 1 erkennen, dass bei dieser Ausführungsform auch eine etwa parallel zur Seitenscheibe 15 ausgerichtete Verschiebung des Sonnenblendenkörpers 7 gegeben ist.

**Patentansprüche**

1. Anordnung einer Sonnenblende in einem Fahrzeug, wobei die Sonnenblende im wesentlichen aus einem Sonnenblendenkörper (7) mit daran angeordneten Lagerelementen besteht, die verschiebbar in am Fahrzeug oberhalb einer vorderen Seitenscheibe (15) befestigte Führungen aufgenommen sind und wobei der Sonnenblendenkörper (7) aus einer sich oberhalb einer vorderen Seitenscheibe (15) befindlichen Nichtgebrauchslage in eine etwa parallel zur Seitenscheibe (15) ausgerichteten Gebrauchslage überführbar ist, dadurch gekennzeichnet, dass die Lagerelemente an der der Seitenscheibe (15) zugewandten Rückseite des Sonnenblendenkörpers (7) angeordnet sind und aus mit ihren freien Enden die obere Randkante des Sonnenblendenkörpers (7) überragenden Zapfen (29) bestehen, die in am Dachhimmel (37) oder an der Fahrzeugkarosserie befestigten Führungsstutzen (33) verschiebbar gelagert sind.

2. Anordnung und Anspruch 1, dadurch gekennzeichnet, dass die Zapfen (29) eine zweiarmige Gabelform aufweisen und an ihren freien Endbereichen mit nach aussen gerichteten Endanschlägen (32) ausgebildet sind.

3. Anordnung nach Anspruch 1 oder 2, dadurch gekennzeichnet, dass die Zapfen (29) aus einem biegeelastischen Werkstoff bestehen.

4. Anordnung nach einem oder mehreren der Ansprüche 1 bis 3, dadurch gekennzeichnet, dass die Zapfen (29) ratschenartig verschiebbar in den Führungsstutzen (33) gelagert sind.

5. Anordnung nach einem der Ansprüche 1 bis 4, dadurch gekennzeichnet, dass der Sonnenblendenkörper (7) mit zwei an seiner Rückseite jeweils über ein abgewinkeltes Fussstück (30) angeschlossene Zapfen (29) ausgerüstet ist, die sich bis etwa an seine untere Randkante erstrecken.

6. Anordnung nach Anspruch 1, dadurch gekennzeichnet, dass die Führungsstutzen (33) einstückig mit einer am Dachhimmel (37) und/oder an der Karosserie des Fahrzeugs befestigten Rosette (34) ausgebildet sind.

7, Anordnung nach Anspruch 6, dadurch gekennzeichnet, dass die Rosette (34) für eine Steckmontage mit angesetzten oder angeformten Nocken (35) ausgebildet ist.

8. Anordnung nach einem oder mehreren der Ansprüche 1 bis 7, dadurch gekennzeichnet, dass der Sonnenblendenkörper (7) einstückig mit den Zapfen (29) ausgebildet ist und ebenso wie die Rosette (34) mit ihren Führungszapfen (33) aus einem Kunststoff-Spritzgussteil besteht.

**Revendications**

1. Montage d'un pare-soleil dans un véhicule, le pare-soleil comprenant essentiellement un corps de pare-soleil (7) avec des éléments d'appui qui y sont placés et sont reçus de façon à pouvoir coulisser dans des glissières fixées au véhicule au-dessus d'une glace latérale avant (15), et le corps de pare-soleil (7) pouvant passer d'une position inactive se trouvant audessus d'une glace latérale avant (15) à une position d'uitlisation orientée sensiblement parallèlement à la glace latérale (15), caractérisé en ce que les éléments d'appui sont placés sur la face postérieure du corps de pare-soleil (7) située du côté de la glace latérale (15) et sont constitués par des tenons (29) dépassant, par leurs extrémités libres, du bord supérieur du corps de pare-soleil (7), et placés de façon à pouvoir coulisser dans des supports de guidage (33) fixés au plafond (37) ou à la carrosserie du véhicule.

2. Montage selon la revendication 1, caractérisé en ce que les tenons (29) présentent une forme de fourche à deux branches et comportent, à leurs extrémités libres, des butées terminales (32) dirigées vers l'extérieur.

3. Montage selon la revendication 1 ou 2, caractérisé en ce que les tenons (29) sont constitués par une matière élastiquement flexible.

4. Montage selon une ou plusieurs des revendications 1 à 3, caractérisé en ce que les tenons (29) sont montés de façon à pouvoir coulisser à la façon d'un cliquet dans les supports de guidage (33).

5. Montage selon l'une des revendications 1 à 4, caractérisé en ce que le corps de pare-soleil (7) comporte deux tenons (29), raccordés chacun à sa face postérieure par une section de pied coudée (30), qui s'étendent à peu près jusqu'à son bord inférieur.

6. Montage selon la revendication 1, caractérisé en ce que les supports de guidage (33) sont réalisés d'un seul tenant avec une rosette (34) fixée au plafond (37) et/ou à la carrosserie du véhicule.

7. Montage selon la revendication 6, caractérisé en ce que la rosette (34) est réalisée avec des ergots (35) posés ou formés sur elle pour un montage par enfichage.

8. Montage selon une ou plusieurs des revendications 1 à 7, caractérisé en ce que le corps de pare-soleil (7) est réalisé d'un seul tenant avec les tenons (29) et est constitué, de même que la rosette (34), avec ses supports de guidage (33), par une pièce de matière plastique moulée par injection.

**Claims**

1. A system of mounting a sun visor in a vehicle, the sun visor comprising a sun-visor body (7) including supports secured thereto and displaceably mountable in respective guide elements fastenable to the vehicle above a selected one of the front side windows (15) thereof so as to permit the visor body (7) to be displaced from its normal position above the one front side window (15) into its operative position substantially parallel with the side window (15), characterized in that the supports are secured to the visor body's (7) rear face facing said side window (15) and are lugs (29) the free end portions of which project beyond the visor body's (7) upper longitudinal edge and in that the lugs are displaceably mountable in the guide elements which are sockets (33) fastenable to the roof (37) of the vehicle or its main body.

2. A system according to claim 1, characterized in that the lugs (29) are shaped like forks having two prongs the free end portions of which are formed with outwardly directed stops (32).

3. A system according to claim 1 or claim 2, characterized in that the lugs (29) are made of a resiliently bendable material.

4. A system according to any of the claims 1 to 3, characterized in that the lugs (29) mountable in the guide sockets (33) are displaceable therein in a manner like the operation of a ratchet mechanism.

5. A system according to any of the claims 1 to 4, characterized in that the visor body (7) is provided with two lugs (29) sucured to its rear face through a bent base portion (30) of each of the lugs (29), and in that the base portions extend to the vicinity of the visor body's lower longitudinal edge.

6. A system according to claim 1, characterized in that each guide socket (33) is formed integrally with a collar (34) fastenable to the roof (37) and/or the main body of the vehicle.

7. A system according to claim 6, characterized in that each collar (34) is provided with an attached or integrally formed cam (35) permitting it to be plug-in fastened.

8. A system according to any one or more of the claims 1 to 7, characterized in that the sun visor body (7) is formed integrally with the lugs (29) and is made, like the collars (34) and their respective guide sockets (33), of an injection-moulded plastics material.

Fig. 2

Fig. 1